# FASCICULE DE BREVET EUROPEEN

(11) **EP 3 928 610 B1**
(45) Date de publication et mention de la délivrance du brevet: **24.04.2024**
(21) Numéro de dépôt: 21181871.1
(22) Date de dépôt: 25.06.2021
(51) Int. Cl.: A01C 5/06, A01C 7/20

(54) **SEMOIR RÉGLABLE**
REGULIERBARE SÄMASCHINE
ADJUSTABLE SOWING MACHINE

(30) Priorité: 26.06.2020 FR 2006707
(43) Date de publication de la demande: 29.12.2021
(73) Titulaire: Carbure Technologies SAS, 49490 Noyant-Villages (FR)
(72) Inventeur: DUMOULIN, Tom, 49400 Saumur (FR)
(74) Mandataire: Cabinet Nony

(56) Documents cités:
- DE-A1- 2 718 921
- FR-A- 419 214
- GB-A- 818 672
- US-A- 1 478 894
- US-A- 2 515 368
- US-A- 3 718 191
- US-A1- 2020 137 940

## Description

### Domaine technique

La présente invention concerne un semoir à soc, ci-après « semoir », destiné à être fixé sur un engin agricole. Un tel semoir est destiné à disposer un composé, en particulier une graine ou un engrais, dans la terre. L'invention concerne aussi un procédé de semage mettant en oeuvre un tel semoir.

### Art antérieur

US 1 478 894, FR 419 214, US2020/137940, US 2 515 368, US 3 718 191, DE 27 18 921 et GB 818 672 décrivent des semoirs et des accessoires de semoir. Un semoir à soc est destiné à ameublir la terre, puis à disposer un composé, et en particulier une graine dans la terre ainsi ameublie. Il comporte classiquement :
- un étançon destiné à être tracté par un tracteur, classiquement une dent « queue de cochon », ou une dent fixe ou une dent à ressort,
- un soc d'ameublissement du sol, rigidement fixé sur l'étançon,
- une descente de semoir comportant un tube débouchant derrière le soc, par une ouverture inférieure de distribution, et une embase sur laquelle le tube est rigidement fixé, elle-même rigidement fixée sur l'étançon.

De tels semoirs sont bien connus et largement utilisés. Ils sont en effet efficaces et ont une longue durée de vie. Cependant, l'agriculteur cherche toujours à augmenter la récolte et sait que l'étape de semage est essentielle à cet effet.

Il existe ainsi un besoin permanent pour un nouveau semoir permettant d'améliorer les rendements.

Un but de l'invention est de répondre, au moins partiellement, à ce besoin.

### Résumé de l'invention

L'invention propose un semoir comportant :
- un étançon destiné à être tracté par un engin agricole suivant une direction d'avancement, l'étançon s'étendant selon un plan longitudinal médian,
- un soc d'ameublissement du sol, rigidement fixé sur l'étançon,
- une descente de semoir comportant un tube de distribution principal débouchant, de préférence derrière le soc, par une ouverture inférieure, une embase principale sur laquelle le tube de distribution principal est rigidement fixé, et un adaptateur, rigidement fixé à l'étançon,
l'embase principale étant rigidement fixée à l'adaptateur dans une position réglable, par rapport à l'adaptateur :
- en translation selon un premier axe de translation, de préférence parallèle au plan longitudinal médian, et
- indépendamment de ladite translation, en rotation autour d'un premier axe de rotation perpendiculaire au premier axe de translation.

Comme on le verra plus en détail dans la suite de la description, la possibilité de régler la position de l'embase en translation et en rotation permet de positionner l'ouverture inférieure à proximité immédiate du soc, ce qui améliore le rendement, la qualité du semis et une levée régulière des plantes.

Sans être lié par cette théorie, l'inventeur considère que cette amélioration résulte d'un meilleur contrôle de la profondeur à laquelle le composé est déposé. En effet, la terre ameublie par le soc tend à se refermer après le passage du soc. L'intervalle de temps entre le passage du soc et le dépôt du composé influe donc sur cette profondeur. Or la vitesse de l'engin agricole, dont dépend cet intervalle de temps, est variable. En fonction de la vitesse de l'engin agricole, le composé est donc déposé à une profondeur variable.

Il en résulte une croissance des végétaux qui n'est pas uniforme, une impossibilité pratique d'optimiser les conditions de cette croissance pour tous les végétaux, et donc une baisse globale du rendement.

Un semoir selon l'invention peut également comporter une ou plusieurs des caractéristiques optionnelles suivantes :
- l'embase principale et l'adaptateur sont conformés de manière que l'ouverture inférieure débouche à moins de 20 cm, de préférence à moins de 10 cm, de préférence à moins de 5 cm de l'extrémité inférieure de l'étançon, de préférence sous ladite extrémité inférieure de l'étançon ;
- l'embase principale et l'adaptateur sont conformés de manière que, dans la position de service, l'ouverture inférieure soit à moins de 10 cm, de préférence à moins de 5 cm, de préférence à moins de 2 cm du niveau du sol, de préférence sous le niveau du sol ;
- l'étançon est en sandwich entre le soc et l'adaptateur ;
- l'embase principale et l'adaptateur sont conformés de manière que l'ouverture inférieure débouche à une distance du soc, mesurée suivant la direction d'avancement, inférieure à 30 cm, de préférence inférieure à 20 cm, de préférence inférieure à 20 cm et/ou supérieure à 3 cm ;
- le tube de distribution principal est la dernière pièce du semoir par laquelle un composé à semer transite avant de toucher le sol, c'est-à-dire constitue la pièce de guidage du composé à semer qui est la plus en aval dans le sens du parcours dudit composé ;
- le premier axe de translation forme, avec la direction d'éjection dudit composé par l'ouverture inférieure, un angle θ inférieur à 20° ;
- l'embase principale est rigidement fixée à l'adaptateur dans une position réglable par rapport à l'adaptateur de manière que, dans la position de service, l'ouverture inférieure du tube de distribution principal soit disposée dans la terre ameublie par le passage du soc ;
- de préférence, ledit réglage de la position de l'embase principale par rapport à l'adaptateur n'autorise que des positions telles que dans la position de service, l'ouverture inférieure du tube de distribution principal soit disposée dans la terre ameublie par le passage du soc ;
- le premier axe de translation et le premier axe de rotation sont sécants et de préférence perpendiculaires l'un à l'autre ;
- le point auquel le premier axe de translation et le premier axe de rotation se coupent est choisi parmi un ensemble de points prédéterminés, de préférence régulièrement distribués sur le premier axe de translation ;
- les points prédéterminés sont les centres d'orifices de translation traversant transversalement l'adaptateur ou l'embase, de préférence traversant l'embase ;
- le semoir comporte des moyens de serrage de l'embase sur l'adaptateur, de préférence selon une direction transversale (perpendiculaire au plan longitudinal), les moyens de serrage comportant de préférence des boulons traversant les orifices de translation ;

Un semoir selon l'invention comporte :
   - une pluralité de premiers orifices « de translation », alignés selon le premier axe de translation,
   - un premier pivot s'étendant selon ledit premier axe de rotation, logé dans un dit premier orifice de translation, ou « orifice de pivot »,
   les premiers orifices de translation étant ménagés dans l'embase principale et le premier pivot étant rigidement fixé à l'adaptateur, ou les premiers orifices de translation étant ménagés dans l'adaptateur, le premier pivot étant rigidement fixé à l'embase principale ;
Un semoir selon l'invention comporte :
   - une pluralité de premiers orifices « de rotation », chaque premier orifice de rotation ayant une forme de boutonnière circulaire centrée sur un premier orifice de translation respectif, correspondant au dit premier orifice de rotation,
   - un premier pivot s'étendant selon ledit premier axe de rotation, logé dans un dit premier orifice de translation, ou « orifice de pivot », et
   - un premier coulisseau, monté coulissant dans le premier orifice de rotation correspondant à l'orifice de pivot,
   les premiers orifices de rotation étant ménagés dans l'embase principale, le premier coulisseau étant rigidement fixé à l'adaptateur, ou les premiers orifices de rotation étant ménagés dans l'adaptateur, le premier coulisseau étant rigidement fixé à l'embase principale ;
Un semoir selon l'invention peut également comporter une ou plusieurs des caractéristiques optionnelles suivantes:
   - le premier pivot et/ou le coulisseau est (sont) un pion, ou une goupille ou une vis d'un boulon ;
   - le premier pivot est rigidement fixé sur l'embase principale ou sur l'adaptateur dans une position réglable ;
   - le premier coulisseau est rigidement fixé sur l'embase principale ou sur l'adaptateur dans une position réglable ;
   - l'adaptateur est démontable de l'étançon ;
   - le semoir comporte une vis traversant l'adaptateur, l'étançon et le soc, et un écrou vissé sur la vis de manière à solidariser rigidement l'étançon, l'adaptateur et le soc ;
   - la vis traverse de préférence successivement l'adaptateur, l'étançon et le soc de manière que l'écrou et la vis serrent l'étançon entre l'adaptateur et le soc ;
   - la descente de semoir comporte un tube de distribution secondaire débouchant derrière le tube de distribution principal, une embase secondaire sur laquelle le tube de distribution secondaire est rigidement fixé, l'embase secondaire étant rigidement fixée à l'embase principale dans une position réglable, par rapport à l'embase principale :
      - en translation selon un deuxième axe de translation, de préférence coplanaire au premier axe de translation, de préférence parallèle au plan longitudinal médian, et
      - indépendamment de ladite translation, en rotation autour d'un deuxième axe de rotation perpendiculaire au dit deuxième axe de translation ;
   - le semoir comporte :
      - une pluralité de deuxièmes orifices « de translation » alignés selon le deuxième axe de translation,
      - une pluralité de deuxièmes orifices « de rotation », chaque deuxième orifice de rotation ayant une forme de boutonnière circulaire centrée sur un deuxième orifice de translation respectif,
      - un deuxième pivot s'étendant selon ledit deuxième axe de rotation, logé dans un dit deuxième orifice de translation, et
      - un deuxième coulisseau, monté coulissant dans le deuxième orifice de rotation correspondant au deuxième orifice de translation dans lequel le deuxième pivot est logé, les deuxièmes orifices de translation étant ménagés dans l'embase secondaire et le deuxième pivot étant rigidement fixé à l'embase principale, ou les deuxièmes orifices de translation étant ménagés dans l'embase principale, le deuxième pivot étant rigidement fixé à l'embase secondaire, et/ou
   les deuxièmes orifices de rotation étant ménagés dans l'embase secondaire, le deuxième coulisseau étant rigidement fixé à l'embase principale, ou les deuxièmes orifices de rotation étant ménagés dans l'embase principale, le deuxième coulisseau étant rigidement fixé à l'embase secondaire.

La divulgation concerne également un procédé de semage dans lequel on tracte un semoir selon l'invention selon la direction d'avancement, de manière que le soc ameublisse la terre, et la descente de semoir conduise un composé dans la terre ameublie.

### Brève description des figures

D'autres caractéristiques et avantages de l'invention apparaitront encore à la lecture de la description détaillée qui va suivre et à l'examen des planches de figures dans lesquelles :
[fig 1] représente schématiquement, vu de côté, un semoir selon un exemple de réalisation de l'invention ;
[fig 2] représente schématiquement, vu de face, le semoir de la figure 1 ;
[fig 3] représente schématiquement, en perspective, l'adaptateur du semoir de la figure 1 ;
[fig 4] représente schématiquement, vue de côté, une variante du semoir de la figure 1 ;
[fig 5] représente schématiquement, vue de côté, une variante du semoir de la figure 1 ;
[fig 6] représente schématiquement, un détail du semoir de la figure 1 ;
[fig 7] illustre schématiquement une variante d'un semoir selon l'invention ;
[fig 8] représente schématiquement, vue de côté, une variante d'un semoir selon l'invention, dans un mode de réalisation sensiblement équivalent à celui de la figure 5.

### Définitions

La « position de service » est classiquement la position dans laquelle le semoir est tiré par un engin agricole, classiquement un tracteur, sur un sol sensiblement horizontal, de manière à semer des graines dans le sol.

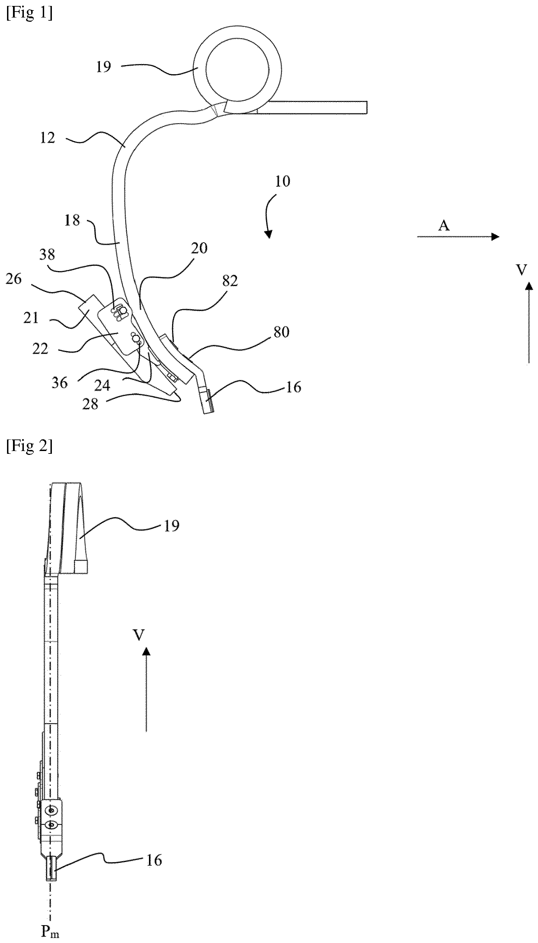

La direction d'avancement ou « direction longitudinale » est la direction orientée A (figure 1) selon laquelle le semoir est prévu pour être tracté dans la position de service.

Une distance ou une dimension « longitudinales » sont mesurées selon la direction d'avancement. Les longueurs sont mesurées selon la direction d'avancement.

Un plan longitudinal est un plan vertical parallèle à la direction d'avancement.

Le plan longitudinal médian est le plan longitudinal s'étendant à mi-largeur de l'étançon.

La flèche référencée « V » est verticale et pointe vers le haut.

Un plan transversal est un plan perpendiculaire à la direction d'avancement A.

Deux axes sont « perpendiculaires » l'un à l'autre lorsqu'un plan perpendiculaire à un dit axe est perpendiculaire à un plan perpendiculaire à l'autre dit axe.

Un orifice de rotation a une forme de boutonnière circulaire « centrée » sur un orifice de translation lorsque la boutonnière s'étend selon un cercle dont le centre est au centre de l'orifice de translation. Ces orifices de rotation et de translation sont dits « en correspondance ».

Dans la présente description, les adjectifs « inférieur », « supérieur », « horizontal », "vertical", « devant », « derrière », « avant », « arrière », « droite », « gauche » et « latéral » sont définis par rapport à la direction d'avancement (la flèche A pointe donc vers « l'avant »). « De rotation » et « de translation » sont utilisés pour désigner des orifices ou des boulons, à des fins de clarté.

Une fixation « rigide » d'une pièce sur une autre pièce assure une immobilisation de cette pièce par rapport à cette autre pièce. La fixation rigide est « réglable », ou assure une « position réglable », s'il est possible de supprimer provisoirement la rigidité de la fixation pour modifier les positions relatives des pièces fixées l'une à l'autre, par exemple par desserrage de boulons assurant la fixation rigide, déplacement d'une pièce par rapport à l'autre, puis resserrage des boulons.

La fixation rigide d'une pièce sur une autre peut être directe ou par l'intermédiaire d'une ou plusieurs autres pièces.

Un coulisseau est dit « monté coulissant » dans un orifice de rotation lorsqu'il est possible de le faire coulisser dans cet orifice lors du réglage de la position de l'embase principale par rapport à l'adaptateur (ou de l'embase secondaire par rapport à l'embase principale).

Un boulon est un ensemble constitué d'une vis et d'un écrou apte à être vissé sur la vis.

Une rotation est « indépendante » d'une translation lorsqu'elle est possible sans nécessairement s'accompagner de ladite translation.

Il faut interpréter les verbes "comprendre " ou "comporter " ou "présenter " de manière non restrictive, sauf indication contraire.

### Description détaillée

Comme représenté sur les figures 1 et 2, dans un mode de réalisation préféré, un semoir 10 selon l'invention comporte un étançon 12 destiné à être fixé sur une poutre transversale, non représentée, et sur lequel sont successivement montés, depuis l'avant vers l'arrière, un soc 16 et une descente de semoir 18.

De préférence, l'étançon 12, le soc 16 et la descente de semoir 18 s'étendent sensiblement dans le plan longitudinal médian Pₘ.

Classiquement, le soc 16 est destiné à ameublir et à ouvrir la terre devant la descente de semoir 18. La descente de semoir 18 est destinée à guider un composé, classiquement des graines ou un engrais ou un fertilisant, solide ou liquide, dans la terre. Dans un mode de réalisation, elle est introduite dans la terre de manière à déboucher derrière le soc ou elle débouche au-dessus de la terre.

De préférence, les différentes pièces du semoir comportent, voire sont constituées en un acier à haute limite élastique, ou « HLE », ou en inox. Ces pièces, et en particulier le soc, peuvent être renforcées localement avec du carbure de tungstène et/ou de la soudure anti-abrasion.

### Étançon

L'étançon 12 présente la forme générale d'une virgule, qui vient crocheter le sol lorsque le semoir est tracté.

L'étançon 12 est « à queue de cochon », c'est-à-dire que sa partie supérieure 19 est enroulée sur elle-même, à la manière d'un ressort. En outre, dans un plan perpendiculaire à la direction locale de l'étançon, la plus grande dimension de l'étançon 12 est de préférence inférieure à 100 mm, de préférence inférieure à 80 mm, de préférence inférieure à 60 mm, de préférence inférieure à 40 mm et/ou supérieure à 10 mm ou 20 mm. Cette configuration assure avantageusement un appui élastique sur le sol bien adapté.

La partie inférieure 20 de l'étançon 12 porte le soc 16 et la descente de semoir 18.

### Descente de semoir

La descente de semoir 18 comporte un tube de distribution principal 21, une embase principale 22 et un adaptateur 24.

Le tube de distribution principal 21 et/ou l'embase principale 22 et/ou l'adaptateur 24 sont de préférence en acier, en inox, ou en plastique.

Le tube de distribution principal 21 peut être en particulier de section transversale circulaire, rectangulaire, ou ovale.

Son axe peut être rectiligne, comme représenté sur les figures, ou être courbe. De préférence, le semoir est conformé de manière à projeter, par gravité, le composé à déposer vers l'avant, de préférence à proximité immédiate du soc.

Le tube de distribution principal 21 débouche par une ouverture supérieure 26 et par une ouverture inférieure 28. L'ouverture supérieure est destinée à être mise en communication avec une source du composé à déposer, par exemple un réservoir de graines ou de produit phytosanitaire (non représenté), qui peut être notamment solidaire de l'engin de traction ou de l'étançon 12. L'ouverture inférieure 28 est destinée à être disposée dans la terre ameublie par le passage du soc 16.

Le diamètre équivalent de la descente de semoir est de préférence supérieur à 2 mm, de préférence supérieur à 8 mm, voire supérieur à 10 mm et/ou inférieur à 60 mm, de préférence inférieur à 50 mm, de préférence inférieur à 40 mm, à 30 mm, de préférence inférieur à 25 mm.

Le tube de distribution principal 21 est fixé sur l'embase principale, par exemple soudé à l'embase principale 22.

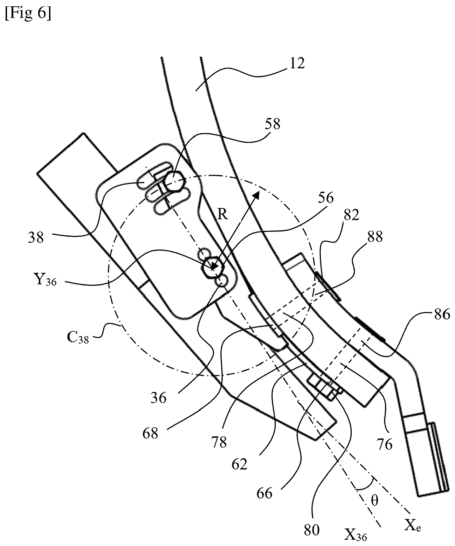

Comme représenté sur la Figure 6, l'embase principale 22 est percée de plusieurs premiers orifices « de translation » 36, alignés selon un axe de translation X₃₆, et une pluralité de premiers orifices « de rotation » 38 s'étendant le long de cercles respectifs C₃₈, ou « boutonnières circulaires », ou « boutonnières de rotation ». Chaque cercle C₃₈ est centré sur un premier orifice de translation 36 respectif.

Le nombre de premiers orifices de translation 36 est de préférence supérieur à 2, à 3, à 4 ou à 5 et/ou inférieur à 20, à 15 ou à 10.

Le nombre de premiers orifices de rotation 38 est de préférence supérieur à 2, à 3, à 4 ou à 5 et/ou inférieur à 20, à 15 ou à 10.

On appelle « direction d'éjection » Xₑ (Figure 6) la direction du composé à semer lorsqu'il sort par l'ouverture inférieure. De préférence, la direction d'éjection est perpendiculaire au plan de l'ouverture inférieure.

L'axe de translation X₃₆ forme, avec une direction d'éjection des composés à semer, Xₑ, un angle θ inférieur à 60°, de préférence inférieur à 40°, de préférence inférieur à 20°, de préférence inférieur à 10°, de préférence inférieur à 5°. De préférence, l'angle θ est sensiblement nul, de sorte que la translation conduit à rapprocher du sol l'ouverture inférieure du tube de distribution principal selon la direction d'éjection.

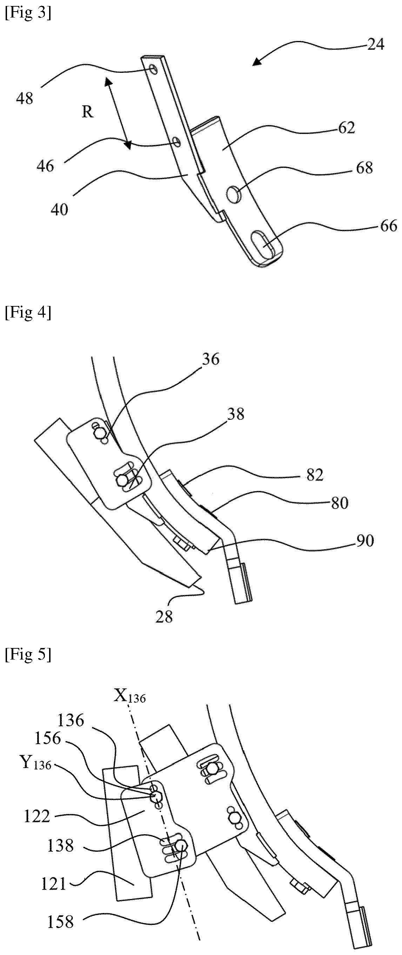

Comme représenté sur la figure 3, l'adaptateur 24 comporte une plaque d'embase 40 destinée à la fixation de l'embase principale 22.

A cet effet, la plaque d'embase 40 est percée d'un orifice d'adaptateur « de translation » 46, qui, dans la position assemblée de la figure 1 est en regard d'un premier orifice de translation 36, et d'un orifice d'adaptateur « de rotation » 48, qui, dans la position assemblée de la figure 1 est en regard d'un premier orifice de rotation 38. La distance entre les deuxièmes orifices de translation et de rotation est donc égale au rayon R des cercles C₃₈.

Un premier pivot, sous la forme de la vis d'un boulon « de translation » 56, traverse les premier et deuxième orifices de translation. Un premier coulisseau, sous la forme de la vis d'un boulon « de rotation » 58, traverse les premier et deuxième orifices de rotation. Le serrage des écrous de ces boulons sur ces vis assure une fixation rigide de l'embase principale 22 sur l'adaptateur 24.

Après desserrage, la position angulaire de l'embase principale 22 autour de la vis du boulon de translation 56 peut être modifiée, la vis du boulon de rotation coulissant dans le premier orifice de rotation 38 dans lequel elle est montée.

Par ailleurs, l'adaptateur 24 comporte une plaque de fixation 62 destinée à la fixation de l'adaptateur 24 sur l'étançon 12, de préférence de manière amovible. La plaque de fixation 62 présente de préférence une forme sensiblement complémentaire à la partie de l'étançon sur laquelle elle s'appuie, de préférence la face arrière de l'étançon.

La plaque de fixation 62 est percée d'orifices de fixation inférieur 66 et supérieur 68 qui, dans la position assemblée de la figure 1 ou de la figure 6, sont en regard d'orifices d'étançon inférieur 76 et supérieur 78, respectivement, les vis de boulons « de fixation » inférieur 80 et supérieur 82 traversant les orifices de fixation 66 et d'étançon 76 inférieurs, et traversant les orifices de fixation 68 et d'étançon 78 supérieurs, respectivement, pour assurer la fixation rigide de l'adaptateur à l'étançon.

La plaque d'embase 40 s'étend, à partir de la plaque de fixation 62, vers l'arrière, dans un plan longitudinal vertical. De préférence, ce plan est déporté transversalement par rapport au plan longitudinal médian Pₘ afin que l'axe du tube de distribution principal puisse s'étendre dans le plan longitudinal médian, et que ce tube soit ainsi efficacement protégé par l'étançon et par le soc.

### Soc

Le soc 16 est de préférence renforcé par du carbure de tungstène.

Le soc 16 s'étend de préférence dans un plan vertical, de préférence dans le plan longitudinal médian Pₘ, de préférence avec une inclinaison vers l'avant, formant un angle avec un plan transversal de préférence supérieur à 5°, à 10°, et/ou inférieur à 50°, à 30° ou inférieur à 20°.

De préférence, le soc présente une largeur, mesurée transversalement, de préférence supérieure à 3 mm, de préférence supérieure à 10 mm, de préférence supérieure à 12 mm, ou encore supérieure à 14 mm et/ou inférieure à 80 mm, de préférence inférieure à 25 mm, de préférence inférieure à 20 mm. Une telle largeur est bien adaptée au dépôt des graines.

Le soc 16 est de préférence fixé de manière détachable sur l'étançon. Avantageusement, le soc 16 peut être détaché du semoir sans avoir à détacher l'intégralité de l'étançon, ce qui permet la fixation de socs de formes variées à l'étançon.

Le soc est fixé sur la partie inférieure 20 de l'étançon, de préférence au moyen d'au moins un des boulons de fixation inférieur 80 et supérieur 82. Le soc est de préférence fixé sur la partie inférieure 20 de l'étançon des deux boulons de fixation inférieur 80 et supérieur 82, dont les vis traversent des orifices de soc inférieur 86 et supérieur 88, respectivement

Le nombre de pièces en est réduit et la compacité augmentée.

### Fonctionnement

Le fonctionnement d'un semoir selon l'invention résulte directement de la description qui précède.

L'embase principale 22, l'adaptateur 24 et le soc 16 sont initialement démontés. L'opérateur dispose les vis des boulons de fixation inférieur 80 et supérieur 82 à travers les orifices de soc inférieur 86 et supérieur 88, respectivement, à travers les orifices d'étançon inférieur 76 et supérieur 78, respectivement, et à travers les orifices de fixation inférieur 66 et supérieur 68, respectivement. Il serre ensuite les écrous de ces boulons sur ces vis, ce qui permet, en une seule opération, de solidariser le soc 16 et l'adaptateur 24 à l'étançon. Par ailleurs, l'adaptateur 24 est avantageusement protégé par l'étançon.

L'opérateur place ainsi ensuite l'embase principale 22 de manière qu'un premier orifice de translation 36 soit en regard, c'est-à-dire en face de le deuxième orifice de translation 46. Le choix de le premier orifice de translation 36 est déterminé en fonction du positionnement souhaité pour l'ouverture inférieure 28 du tube de distribution principal.

L'opérateur insère ensuite dans ces orifices la vis du boulon de translation 56, ce qui permet à cette vis de servir de pivot à une rotation de l'embase principale 22 par rapport à l'adaptateur 22.

Il ajuste ensuite la position angulaire de l'embase principale 22 autour du premier axe de rotation Y₃₆ défini par cette vis.

Le choix du premier orifice de translation et l'ajustement de la position angulaire permettent avantageusement de disposer avec précision l'ouverture inférieure 28 du tube de distribution principal à l'emplacement souhaité. L'invention permet en particulier de positionner l'ouverture inférieure 28 du tube de distribution principal sous l'extrémité inférieure 90 de l'étançon, comme représenté sur la figure 4.

L'opérateur serre ensuite les écrous des boulons de rotation et de translation afin d'immobiliser l'embase principale 22 par rapport à l'adaptateur 24.

Par ailleurs, la forme de boutonnière des premiers orifices de rotation permet avantageusement un réglage très fin de la position angulaire. Alternativement, l'embase peut comporter une pluralité de premiers orifices de rotation circulaires permettant de définir une pluralité de positions angulaires prédéfinie.

L'étançon est ensuite solidarisé à un engin agricole, classiquement un tracteur, puis tiré sur le terrain à semer, selon la direction d'avancement. Lors de son avancement, le soc ameublit la terre. Le composé, par exemple des graines, est alors progressivement déposé dans la terre, par l'intermédiaire de la descente de semoir 18.

Comme cela apparaît clairement présent, l'invention fournit une solution simple permettant de déposer des composés derrière le soc et à proximité immédiate du soc. Le réglage de la position de l'ouverture inférieure du tube de distribution principal permet avantageusement de réduire son écartement du soc, et donc de réduire l'intervalle de temps entre le passage du soc et le dépôt du composé. L'impact de la vitesse de l'engin agricole sur la profondeur à laquelle le composé est déposé et donc plus faible. L'optimisation de la culture en est facilitée.

Le réglage de la position de l'ouverture inférieure du tube de distribution principal permet également, pour une même vitesse de l'engin agricole, de modifier la profondeur d'enfouissement du composé déposé.

Bien entendu, l'invention n'est pas limitée au mode de réalisation décrit et représenté sur les figures 1, 2 et 6.

En particulier, comme représenté sur la figure 4, les premiers orifices de translation 36 peuvent être au-dessus des premiers orifices de rotation 38, c'est-à-dire à une altitude supérieure à celle des premiers orifices de rotation. Le mode de réalisation des figures 1 et 2, dans lequel les premiers orifices de translation sont à une altitude inférieure à celle des premiers orifices de rotation est cependant préféré, en particulier parce qu'il est plus robuste.

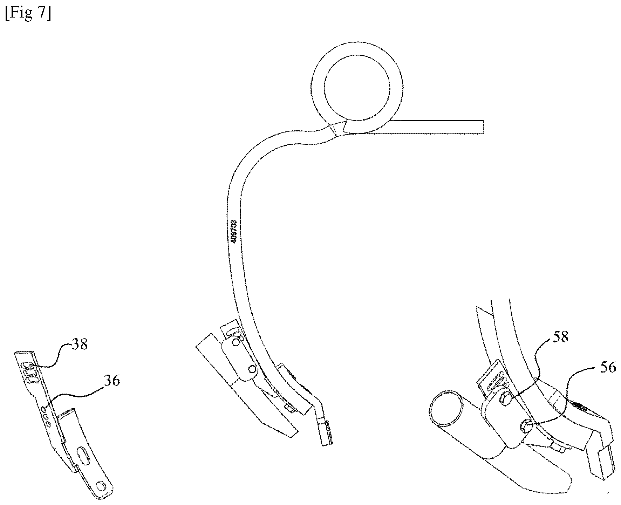

L'invention concerne également un semoir comportant des moyens d'attache de l'embase principale sur l'adaptateur équivalents à ceux décrits ci-dessus. Par exemple, les boutonnières circulaires peuvent être ménagées sur l'adaptateur et non sur l'embase principale 22, l'embase principale comportant un unique premier orifice de rotation, comme illustré sur la figure 7.

L'adaptateur peut comporter plusieurs deuxièmes orifices de translation et l'embase principale comporter un unique premier orifice de translation.

A la fois l'adaptateur et l'embase principale peuvent comporter plusieurs orifices de translation et/ou plusieurs orifices de rotation, de manière à augmenter le nombre de positions possibles de l'embase principale par rapport à l'adaptateur.

En particulier, dans un mode de réalisation, un ou plusieurs premiers orifices de rotation et un ou plusieurs deuxièmes orifices de rotation sont des boutonnières circulaires. Avantageusement, l'amplitude de la rotation possible de l'embase principale par rapport à l'adaptateur en est augmentée.

Des premiers orifices de translation et/ou des deuxièmes orifices de translation peuvent être remplacés par une boutonnière rectiligne, de manière à définir une infinité de positions de l'embase principale le long de l'axe de translation X₃₆. De préférence cependant, comme dans les modes de réalisation représentés, les orifices de translation ne définissent chacun qu'une unique position de l'embase principale le long de l'axe de translation X₃₆, et, dans cette position, au moins un premier orifice de rotation est en face d'au moins un deuxième orifice de rotation. Le positionnement de l'embase principale en est facilité.

Le premier axe de rotation Y₃₆ de l'embase principale sur l'adaptateur peut être définie par d'autres pivots qu'une vis d'un boulon, par exemple par une goupille ou par un pion, par exemple un pion faisant saillie de la plaque d'embase 40, de préférence perpendiculairement au plan longitudinal médian.

L'adaptateur n'est pas nécessairement amovible. Il peut être, par exemple, soudé à l'étançon.

Dans un mode de réalisation, illustré sur la figure 5, la descente de semoir comporte un tube de distribution secondaire 121 et une embase secondaire 122 sur laquelle le tube de distribution secondaire est fixé. L'embase secondaire 122 peut être montée sur l'embase principale avec des moyens d'attaches identiques ou similaires à ceux permettant la fixation de l'embase principale sur l'adaptateur, tels que décrits précédemment.

Le tube de distribution principal et le tube de distribution secondaire 121 peuvent ainsi, avantageusement, déposer des composés à des hauteurs différentes.

Le tube de distribution secondaire peut être disposé de manière que le composé qu'il dépose entre en contact avec la terre alors que la terre est encore en mouvement ou est redevenue immobile.

En particulier, sur cette figure 5, le semoir comporte
- une pluralité de deuxièmes orifices de translation 136, alignés selon un deuxième axe de translation X₁₃₆,
- une pluralité de deuxièmes orifices de rotation 138, chaque deuxième orifice de rotation ayant une forme de boutonnière circulaire centrée sur un deuxième orifice de translation 136 respectif,
- un deuxième pivot 156 d'axe Y₁₃₆, sous la forme d'une vis d'un boulon 156, logé dans un deuxième orifice de translation 136, et
- un deuxième coulisseau 158, monté coulissant dans un deuxième orifice de rotation 138.

Les deuxièmes orifices de translation 136 sont ménagés dans l'embase secondaire 122 et le deuxième pivot 156 est rigidement fixé à l'embase principale 22.

Les deuxièmes orifices de rotation 138 sont ménagés dans l'embase secondaire 122, et le deuxième coulisseau 158 est rigidement fixé à l'embase principale 22.

Dans les modes de réalisation décrits ci-dessus, le semoir comporte
- une pluralité d'orifices de translation alignés selon un axe de translation et
- un pivot logé dans un des orifices de translation.

L'orifice de rotation correspondant à cet orifice de translation a une forme de boutonnière circulaire centrée sur cet orifice de translation. L'orifice de rotation est encore appelé « boutonnière de rotation » 38. Seul un mouvement de rotation autour du centre du cercle selon lequel la boutonnière de rotation s'étend est donc possible. Le pivot a de préférence une forme complémentaire à celle de l'orifice de translation.

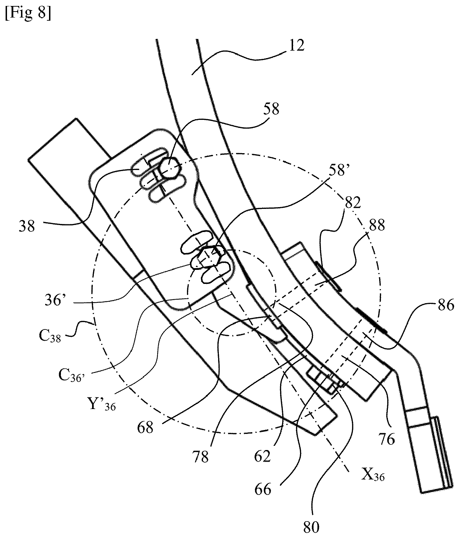

Dans un mode de réalisation équivalent, illustré sur la figure 8, chaque premier orifice de translation 36, sauf éventuellement un (un premier orifice de translation extrême, qui peut prendre la forme d'un trou de section circulaire), de préférence chaque premier orifice de translation 36 présente la forme d'une boutonnière circulaire 36', dite « boutonnière de translation », s'étendant selon un cercle C_{36'} concentrique au cercle C₃₈ de la boutonnière de rotation 38 correspondante. La rotation ne se fait alors plus autour d'un pivot logé dans l'orifice de rotation, mais autour d'un axe de rotation Y'₃₆ passant par les centres des cercles C_{36'} et C₃₈ de support des boutonnières de translation 36' et de rotation 38, respectivement.

Un premier coulisseau secondaire 58' est alors monté coulissant dans une boutonnière de translation. Les boutonnières de translation 36' peuvent être ménagées dans l'embase principale 22 et le premier coulisseau secondaire 58' être rigidement fixé à l'adaptateur 24. Alternativement, les boutonnières de translation 36' peuvent être ménagées dans l'adaptateur 24 et le premier coulisseau secondaire 58' être rigidement fixé à l'embase principale 22.

Ce mode de réalisation équivalent permet avantageusement de déporter l'axe de la rotation, et facilite ainsi la précision du réglage.

Toutes les variantes de l'invention décrites précédemment sont transposables à ce mode de réalisation équivalent. En particulier, la rotation du tube de distribution secondaire peut être réalisée avec des deuxièmes orifices de translation ayant la forme de boutonnières circulaires.

De manière générale, un semoir selon l'invention comporte des moyens de réglage de la position de l'embase principale par rapport à l'adaptateur configurés de manière que la position du premier axe de rotation soit déterminée exclusivement par la position, selon un premier axe de translation, de l'embase principale par rapport à l'adaptateur, c'est-à-dire que
- la fixation de la position de l'embase principale selon le premier axe de translation entraine celle du premier axe de rotation, et,
- réciproquement, la position du premier axe de rotation ne peut être modifiée sans modifier la position de l'embase principale le long du premier axe de translation.

La divulgation concerne ainsi un procédé de réglage d'un semoir comportant :
- un étançon destiné à être tracté par un engin agricole suivant une direction d'avancement, l'étançon s'étendant selon un plan longitudinal médian,
- un soc d'ameublissement du sol, rigidement fixé sur l'étançon,
- une descente de semoir comportant un tube de distribution principal débouchant par une ouverture inférieure, une embase principale sur laquelle le tube de distribution principal est rigidement fixé, et un adaptateur, rigidement fixé à l'étançon,
l'embase principale étant rigidement fixée à l'adaptateur dans une position réglable par rapport à l'adaptateur :
- en translation selon un premier axe de translation, et
- indépendamment de ladite translation, en rotation autour d'un premier axe de rotation coupant perpendiculairement le premier axe de translation.

Suivant ce procédé, on règle la position de l'embase principale par rapport à l'adaptateur suivant les étapes successives suivantes :
a) fixation de la position de l'embase principale selon le premier axe de translation ;
b) rotation de l'embase principale autour du premier axe de rotation ;
c) immobilisation de l'embase principale dans la position résultant des étapes précédentes.

Le procédé peut être en particulier utilisé pour régler un semoir selon l'invention.

## Revendications

1. Semoir comportant :
- un étançon (12) destiné à être tracté par un engin agricole suivant une direction d'avancement (A), l'étançon s'étendant selon un plan longitudinal médian (Pₘ),
- un soc (16) d'ameublissement du sol, rigidement fixé sur l'étançon,
- une descente de semoir (18) comportant un tube de distribution principal (21) débouchant par une ouverture inférieure (28), une embase principale (22) sur laquelle le tube de distribution principal est rigidement fixé, et un adaptateur (24), rigidement fixé à l'étançon (12),
l'embase principale (22) étant rigidement fixée à l'adaptateur (24) dans une position réglable par rapport à l'adaptateur :
- en translation selon un premier axe de translation (X₃₆), et
- indépendamment de ladite translation, en rotation autour d'un premier axe de rotation (Y₃₆, Y'₃₆) perpendiculaire au premier axe de translation (X₃₆),
le semoir comportant encore :
- une pluralité de premiers orifices « de translation » (36), alignés selon ledit premier axe de translation,
- un premier pivot (56) s'étendant selon ledit premier axe de rotation (Y₃₆), logé dans un dit premier orifice de translation (36),
les premiers orifices de translation (36) étant ménagés dans l'embase principale (22) et le premier pivot (56) étant rigidement fixé à l'adaptateur (24), ou les premiers orifices de translation (36) étant ménagés dans l'adaptateur (24), le premier pivot étant rigidement fixé à l'embase principale (22),
- une pluralité de premiers orifices « de rotation » (38), chaque premier orifice de rotation ayant une forme de boutonnière circulaire centrée sur un premier orifice de translation (36) respectif, et
- un premier coulisseau (58), monté coulissant dans le premier orifice de rotation (38) correspondant au premier orifice de translation (36) dans lequel le premier pivot est logé,
les premiers orifices de rotation (38) étant ménagés dans l'embase principale (22), le premier coulisseau (58) étant rigidement fixé à l'adaptateur (24), ou les premiers orifices de rotation (38) étant ménagés dans l'adaptateur (24), le premier coulisseau (58) étant rigidement fixé à l'embase principale (22).

2. Semoir selon la revendication précédente, dans lequel l'embase principale (22) et l'adaptateur (24) sont conformés de manière que l'ouverture inférieure (28) débouche à moins de 20 cm de l'extrémité inférieure (90) de l'étançon et/ou débouche à une distance du soc, mesurée suivant la direction d'avancement, inférieure à 20 cm.

3. Semoir selon l'une quelconque des revendications précédentes, dans lequel le premier pivot (56) et/ou le coulisseau (58) est/sont un pion, ou une goupille ou une vis d'un boulon.

4. Semoir selon la revendication précédente, dans lequel
le premier pivot (56) est rigidement fixé sur l'embase principale (22) ou sur l'adaptateur (24), dans une position réglable, et/ou
le premier coulisseau (58) est rigidement fixé sur l'embase principale (22) ou sur l'adaptateur (24), dans une position réglable.

5. Semoir selon l'une quelconque des revendications précédentes, dans lequel l'adaptateur est démontable de l'étançon (12), le semoir comportant une vis traversant l'adaptateur, l'étançon et le soc, et un écrou vissé sur la vis de manière à solidariser rigidement l'étançon, l'adaptateur et le soc.

6. Semoir selon l'une quelconque des revendications précédentes, dans lequel le premier axe de translation (X₃₆) est parallèle au plan longitudinal médian.

7. Semoir selon l'une quelconque des revendications précédentes, dans lequel le premier axe de translation (X₃₆) forme, avec une direction d'éjection (Xₑ) d'un composé à semer hors du tube de distribution principal (21), un angle θ inférieur à 20°.

8. Semoir selon l'une quelconque des revendications précédentes, dans lequel l'embase principale (22) est rigidement fixée à l'adaptateur (24) dans une position réglable par rapport à l'adaptateur de manière que, dans la position de service, l'ouverture inférieure (28) du tube de distribution principal (21) soit disposée dans la terre ameublie par le passage du soc (16).

9. Semoir selon l'une quelconque des revendications précédentes, comportant plusieurs orifices de translation et dans lequel tous les premiers orifices de translation, sauf optionnellement un, présentent la forme de boutonnières circulaires (36') concentriques audits premiers orifices de rotation (38), un premier coulisseau secondaire (58') étant monté coulissant dans un dit premier orifice de translation en forme de boutonnière,
les premiers orifices de translation (36) étant ménagés dans l'embase principale (22) et le premier coulisseau secondaire (58') étant rigidement fixé à l'adaptateur (24), ou les premiers orifices de translation (36) étant ménagés dans l'adaptateur (24), le premier coulisseau secondaire (58') étant rigidement fixé à l'embase principale (22).

10. Semoir selon l'une quelconque des revendications précédentes, dans lequel la descente de semoir comporte un tube de distribution secondaire (121) débouchant derrière le tube de distribution principal, une embase secondaire (122) sur laquelle le tube de distribution secondaire est rigidement fixé, l'embase secondaire (122) étant rigidement fixée à l'embase principale (22) dans une position réglable, par rapport à l'embase principale (22) :
- en translation selon un deuxième axe de translation (X₁₃₆), et
- indépendamment de ladite translation, en rotation autour d'un deuxième axe de rotation (Y₁₃₆) perpendiculaire au deuxième axe de translation (X₁₃₆).

11. Semoir selon la revendication immédiatement précédente, comportant :
- une pluralité de deuxièmes orifices « de translation » (136), alignés selon le deuxième axe de translation (X₁₃₆),
- une pluralité de deuxièmes orifices « de rotation » (138), chaque deuxième orifice de rotation ayant une forme de boutonnière circulaire centrée sur un deuxième orifice de translation (136) respectif,
- un deuxième pivot (156) s'étendant selon ledit deuxième axe de rotation (Y₁₃₆), logé dans un deuxième orifice de translation (136), et
- un deuxième coulisseau (158), monté coulissant dans le deuxième orifice de rotation (138) correspondant au deuxième orifice de translation (136) dans lequel le deuxième pivot (156) est logé,
les deuxièmes orifices de translation (136) étant ménagés dans l'embase secondaire (122) et le deuxième pivot (156) étant rigidement fixé à l'embase principale (22), ou les deuxièmes orifices de translation (136) étant ménagés dans l'embase principale (22), le deuxième pivot étant rigidement fixé à l'embase secondaire (122), et/ou les deuxièmes orifices de rotation (138) étant ménagés dans l'embase secondaire (122), le deuxième coulisseau (158) étant rigidement fixé à l'embase principale (22), ou les deuxièmes orifices de rotation (38) étant ménagés dans l'embase principale (22), le deuxième coulisseau (158) étant rigidement fixé à l'embase secondaire (122).

## Patentansprüche

1. Sämaschine, umfassend:
- einen Haltestiel (12), der dazu bestimmt ist, von einer landwirtschaftlichen Maschine in einer Fahrtrichtung (A) gezogen zu werden, wobei sich der Haltestiel entlang einer Mittellängsebene (Pₘ) erstreckt,
- ein Sech (16) zur Lockerung des Bodens, das starr am Haltestiel befestigt ist,
- eine Säschar (18), die ein Hauptverteilungsrohr (21), das über eine untere Öffnung (28) mündet, ein Hauptbasisteil (22), an dem das Hauptverteilungsrohr starr befestigt ist, und einen Adapter (24), der an dem Haltestiel (12) starr befestigt ist, umfasst,
wobei das Hauptbasisteil (22) am Adapter (24) in einer Position starr befestigt ist, die in Bezug auf den Adapter einstellbar ist:
- translatorisch entlang einer ersten Translationsachse (X₃₆) und
- unabhängig von dieser Translation rotatorisch um eine erste Drehachse (Y₃₆, Y'₃₆), die zu der ersten Translationsachse (X₃₆) senkrecht ist,
wobei die Sämaschine außerdem umfasst:
- mehrere erste "Translationsöffnungen" (36), die entlang der ersten Translationsachse ausgerichtet sind,
- einen ersten Drehzapfen (56), der sich entlang der ersten Drehachse (Y₃₆) erstreckt und in einer solchen ersten Translationsöffnung (36) aufgenommen ist,
wobei die ersten Translationsöffnungen (36) im Hauptbasisteil (22) ausgebildet sind und der erste Drehzapfen (56) starr am Adapter (24) befestigt ist, oder die ersten Translationsöffnungen (36) im Adapter (24) ausgebildet sind, während der erste Drehzapfen starr am Hauptbasisteil (22) befestigt ist,
- mehrere erste "Rotationsöffnungen" (38), wobei jede erste Rotationsöffnung eine Form eines kreisförmig gebogenen Langlochs hat, das auf einer jeweiligen ersten Translationsöffnung (36) zentriert ist, und
- ein erstes Gleitstück (58), das gleitend in der ersten Rotationsöffnung (38) angebracht ist, die der ersten Translationsöffnung (36) entspricht, in welcher der erste Drehzapfen aufgenommen ist,
wobei die ersten Rotationsöffnungen (38) im Hauptbasisteil (22) ausgebildet sind, während das erste Gleitstück (58) starr am Adapter (24) befestigt ist, oder wobei die ersten Rotationsöffnungen (38) im Adapter (24) ausgebildet sind, während das erste Gleitstück (58) starr am Hauptbasisteil (22) befestigt ist.

2. Sämaschine nach dem vorhergehenden Anspruch, wobei das Hauptbasisteil (22) und der Adapter (24) derart ausgebildet sind, dass die untere Öffnung (28) in weniger als 20 cm Abstand vom unteren Ende (90) des Haltestiels mündet und/oder in einem Abstand vom Sech mündet, der, in Fahrtrichtung gemessen, kleiner als 20 cm ist.

3. Sämaschine nach einem der vorhergehenden Ansprüche, wobei der erste Drehzapfen (56) und/oder das Gleitstück (58) ein Stift oder ein Bolzen oder ein Schraubenbereich eines Schraubenbolzens ist/sind.

4. Sämaschine nach dem vorhergehenden Anspruch, wobei der erste Drehzapfen (56) in einer einstellbaren Position starr am Hauptbasisteil (22) oder am Adapter (24) befestigt ist, und/oder
das erste Gleitstück (58) in einer einstellbaren Position starr am Hauptbasisteil (22) oder am Adapter (24) befestigt ist.

5. Sämaschine nach einem der vorhergehenden Ansprüche, wobei der Adapter von dem Haltestiel (12) demontierbar ist, wobei die Sämaschine eine Schraube, die den Adapter, den Haltestiel und das Sech durchquert, und eine Mutter, die so auf die Schraube aufgeschraubt ist, dass der Haltestiel, der Adapter und das Sech starr aneinander befestigt werden, umfasst.

6. Sämaschine nach einem der vorhergehenden Ansprüche, wobei die erste Translationsachse (X₃₆) parallel zur Mittellängsebene ist.

7. Sämaschine nach einem der vorhergehenden Ansprüche, wobei die erste Translationsachse (X₃₆) mit einer Auswurfrichtung (Xₑ) einer Mischung, die aus dem Hauptverteilungsrohr (21) auszusäen ist, einen Winkel θ bildet, der kleiner als 20° ist.

8. Sämaschine nach einem der vorhergehenden Ansprüche, wobei das Hauptbasisteil (22) starr am Adapter (24) in einer in Bezug auf den Adapter so einstellbaren Position befestigt ist, dass in der Betriebsposition die untere Öffnung (28) des Hauptverteilungsrohrs (21) in der durch den Durchgang des Sechs (16) gelockerten Erde angeordnet ist.

9. Sämaschine nach einem der vorhergehenden Ansprüche, welche mehrere Translationsöffnungen umfasst und wobei alle ersten Translationsöffnungen, optional mit Ausnahme von einer, die Form von kreisförmig gebogenen Langlöchern (36') aufweisen, die konzentrisch zu den ersten Rotationsöffnungen (38) sind, wobei ein erstes sekundäres Gleitstück (58') gleitend in einer solchen ersten Translationsöffnung in Form eines Langlochs angebracht ist,
wobei die ersten Translationsöffnungen (36) im Hauptbasisteil (22) ausgebildet sind und das erste sekundäre Gleitstück (58') starr am Adapter (24) befestigt ist, oder die ersten Translationsöffnungen (36) im Adapter (24) ausgebildet sind, während das erste sekundäre Gleitstück (58') starr am Hauptbasisteil (22) befestigt ist.

10. Sämaschine nach einem der vorhergehenden Ansprüche, wobei die Säschar ein sekundäres Verteilungsrohr (121), das hinter dem Hauptverteilungsrohr mündet, und ein sekundäres Basisteil (122), an dem das sekundäre Verteilungsrohr starr befestigt ist, umfasst, wobei das sekundäre Basisteil (122) am Hauptbasisteil (22) in einer Position starr befestigt ist, die in Bezug auf das Hauptbasisteil (22) einstellbar ist:
- translatorisch entlang einer zweiten Translationsachse (X₁₃₆) und
- unabhängig von dieser Translation rotatorisch um eine zweite Drehachse (Y₁₃₆), die zu der zweiten Translationsachse (X₁₃₆) senkrecht ist.

11. Sämaschine nach dem unmittelbar vorhergehenden Anspruch, umfassend:
- mehrere zweite "Translationsöffnungen" (136), die entlang der zweiten Translationsachse (X₁₃₆) ausgerichtet sind,
- mehrere zweite "Rotationsöffnungen" (138), wobei jede zweite Rotationsöffnung eine Form eines kreisförmig gebogenen Langlochs hat, das auf einer jeweiligen zweiten Translationsöffnung (136) zentriert ist,
- einen zweiten Drehzapfen (156), der sich entlang der zweiten Drehachse (Y₁₃₆) erstreckt und in einer zweiten Translationsöffnung (136) aufgenommen ist, und
- ein zweites Gleitstück (158), das gleitend in der zweiten Rotationsöffnung (138) angebracht ist, die der zweiten Translationsöffnung (136) entspricht, in welcher der zweite Drehzapfen (156) aufgenommen ist,
wobei die zweiten Translationsöffnungen (136) im sekundären Basisteil (122) ausgebildet sind und der zweite Drehzapfen (156) starr am Hauptbasisteil (22) befestigt ist, oder die zweiten Translationsöffnungen (136) im Hauptbasisteil (22) ausgebildet sind, während der zweite Drehzapfen starr am sekundären Basisteil (122) befestigt ist, und/oder
wobei die zweiten Rotationsöffnungen (138) im sekundären Basisteil (122) ausgebildet sind, während das zweite Gleitstück (158) starr am Hauptbasisteil (22) befestigt ist, oder wobei die zweiten Rotationsöffnungen (38) im Hauptbasisteil (22) ausgebildet sind, während das zweite Gleitstück (158) starr am sekundären Basisteil (122) befestigt ist.

## Claims

1. Seeder having:
- a leg (12) intended to be drawn by an agricultural vehicle in a direction of forward movement (A), the leg extending in a median longitudinal plane (Pₘ),
- a share (16) for loosening the ground, which is rigidly fastened to the leg,
- a seed dropper (18) having a main distribution tube (21) opening via a lower opening (28), a main base (22) to which the main distribution tube is rigidly fastened, and an adapter (24), which is rigidly fastened to the leg (12),
the main base (22) being rigidly fastened to the adapter (24) in a position that is adjustable relative to the adapter:
- in translation along a first axis of translation (X₃₆), and
- independently of said translation, in rotation about a first axis of rotation (Y₃₆, Y'₃₆) perpendicular to the first axis of translation (X₃₆),
the seeder also having:
- a plurality of first "translation" orifices (36), which are aligned along said first axis of translation,
- a first pivot (56) extending along said first axis of rotation (Y₃₆), which is housed in one said first translation orifice (36),
the first translation orifices (36) being provided in the main base (22) and the first pivot (56) being rigidly fastened to the adapter (24), or the first translation orifices (36) being provided in the adapter (24), the first pivot being rigidly fastened to the main base (22),
- a plurality of first "rotation" orifices (38), each first rotation orifice having a circular buttonhole shape centred on a respective first translation orifice (36),
and
- a first slider (58), mounted so as to slide in the first rotation orifice (38) corresponding to the first translation orifice (36) in which the first pivot is housed,
the first rotation orifices (38) being provided in the main base (22), the first slider (58) being rigidly fastened to the adapter (24), or the first rotation orifices (38) being provided in the adapter (24), the first slider (58) being rigidly fastened to the main base (22) .

2. Seeder according to the preceding claim, wherein the main base (22) and the adapter (24) are shaped such that the lower opening (28) opens less than 20 cm from the lower end (90) of the leg and/or opens at a distance from the share, measured in the direction of forward movement, of less than 20 cm.

3. Seeder according to either one of the preceding claims, wherein the first pivot (56) and/or the slider (58) is/are a pin, or a peg or a screw of a bolt.

4. Seeder according to the preceding claim, wherein the first pivot (56) is rigidly fastened to the main base (22) or to the adapter (24), in an adjustable position,
and/or
the first slider (58) is rigidly fastened to the main base (22) or to the adapter (24), in an adjustable position.

5. Seeder according to any one of the preceding claims, wherein the adapter is removable from the leg (12), the seeder having a screw passing through the adapter, the leg and the share, and a nut screwed onto the screw so as to rigidly secure the leg, the adapter and the share.

6. Seeder according to any one of the preceding claims, wherein the first axis of translation (X₃₆) is parallel to the median longitudinal plane.

7. Seeder according to any one of the preceding claims, wherein the first axis of translation (X₃₆) forms, with a direction (Xₑ) for ejection of a compound to be sown out of the main distribution tube (21), an angle θ of less than 20°.

8. Seeder according to any one of the preceding claims, wherein the main base (22) is rigidly fastened to the adapter (24) in a position that is adjustable relative to the adapter such that, in the service position, the lower opening (28) of the main distribution tube (21) is disposed in the earth loosened by the passage of the share (16).

9. Seeder according to any one of the preceding claims, having a plurality of translation orifices and wherein all the first translation orifices, optionally except for one, have the shape of circular buttonholes (36') concentric with said first rotation orifices (38), a first secondary slider (58') being mounted so as to slide in one said first translation orifice in the shape of a buttonhole,
the first translation orifices (36) being provided in the main base (22) and the first secondary slider (58') being rigidly fastened to the adapter (24), or the first translation orifices (36) being provided in the adapter (24), the first secondary slider (58') being rigidly fastened to the main base (22).

10. Seeder according to any one of the preceding claims, wherein the seed dropper has a secondary distribution tube (121) opening behind the main distribution tube, a secondary base (122) to which the secondary distribution tube is rigidly fastened, the secondary base (122) being rigidly fastened to the main base (22) in a position that is adjustable, relative to the main base (22):
- in translation along a second axis of translation (X₁₃₆), and
- independently of said translation, in rotation about a second axis of rotation (Y₁₃₆) perpendicular to the second axis of translation (X₁₃₆).

11. Seeder according to the immediately preceding claim, having:
- a plurality of second "translation" orifices (136), which are aligned along the second axis of translation (X₁₃₆),
- a plurality of second "rotation" orifices (138), each second rotation orifice having a circular buttonhole shape centred on a respective second translation orifice (136),
- a second pivot (156) extending along said second axis of rotation (Y₁₃₆), which is housed in a second translation orifice (136), and
- a second slider (158), mounted so as to slide in the second rotation orifice (138) corresponding to the second translation orifice (136) in which the second pivot (156) is housed,
the second translation orifices (136) being provided in the secondary base (122) and the second pivot (156) being rigidly fastened to the main base (22), or the second translation orifices (136) being provided in the main base (22), the second pivot being rigidly fastened to the secondary base (122), and/or
the second rotation orifices (138) being provided in the secondary base (122), the second slider (158) being rigidly fastened to the main base (22), or the second rotation orifices (38) being provided in the main base (22), the second slider (158) being rigidly fastened to the secondary base (122).
